# EUROPEAN PATENT SPECIFICATION

(11) **EP 1 591 003 B1**
(45) Date of publication and mention of the grant of the patent: **17.11.2010**
(21) Application number: 05007887.2
(22) Date of filing: 11.04.2005
(51) Int. Cl.: A01F 12/44, B07B 1/12

(54) **Combine harvester sieve for cereals**
Mähdreschersieb für Getreide
Tamis de moissonneuse-batteuse pour céréales

(30) Priority: 26.04.2004 IT MI20040187 P
(43) Date of publication of application: 02.11.2005
(73) Proprietor: ALFA AGRICOLA S.R.L., 20122 Milano (IT)
(72) Inventor: Maggi, Pietro, 20122 Milano (IT)
(74) Representative: Cicogna, Franco

(56) References cited:
- EP-A- 0 678 238
- US-A- 2 253 296
- US-A- 4 511 466
- US-A- 5 176 574
- US-A- 6 053 812

## Description

### BACKGROUND OF THE INVENTION

The present invention relates to a sieve construction, specifically designed for combine harvesters, for collecting cereals in general.

As is known, conventional combine harvesters comprise a plurality of sieves, designed for separating cores, half-straw, empty ears and eliminating husks or chaff and small impurities, as well as all the other small particles which are usually removed by using removing fans.

The above mentioned sieves, in a conventional embodiment thereof, practically comprise rows of comb elements, made of cut plate-like elements, which are so folded or bent to provide a region thereof to be supported on supporting frame, by supporting pins or the like.

In such a configuration, the above mentioned comb elements frequently generate material stagnation regions, with self-evident operating difficulties.

Another problem of prior sieves for the above mentioned applications is that are not suitable to provide an optimum sieving operation, with an optimum separation of the sieved products, with a consequent requirement of performing further sieving or cleaning operations.

Yet another problem is that the above mentioned comb elements, which are made of a metal sheet material, are not suitable to properly resist against the weight of the material supported thereby.

Thus, due to the above mentioned reasons, said comb elements are frequently irreparably damaged.

The document US-A-2 153 296 discloses the preamble of claim 1.

### SUMMARY OF THE INVENTION

Accordingly, the aim of the present invention is to overcome the above mentioned drawbacks, by providing a sieve construction according to claim 1 specifically designed for combine harvesters for harvesting cereals in general, allowing to greatly simplify the configuration of the above mentioned blades, thereby providing said blades with very good operating properties, while allowing said blades to be assembled in a very quick and simple manner.

Within the scope of the above mentioned aim, a main object of the present invention is to provide such a sieve allowing to optimize the sieving operations, while being specifically adapted to resist against comparatively high weights, without any deformations or damages.

Yet another object of the present invention is to provide such a sieve which, owing to its specifically designed construction, is very reliable and safe in operation.

Yet another object of the present invention is to provide such a sieve which can be easily made starting from easily available elements and materials and which, moreover, is very competitive from a mere economic standpoint.

### BRIEF DESCRIPTION OF THE DRAWINGS

Further characteristics and advantages of the present invention will become more apparent hereinafter from the following detailed disclosure of a sieve, specifically designed for combine harvesters for harvesting cereals in general, which is illustrated, by way of an indicative, but not limitative, example in the accompanying drawings, where:

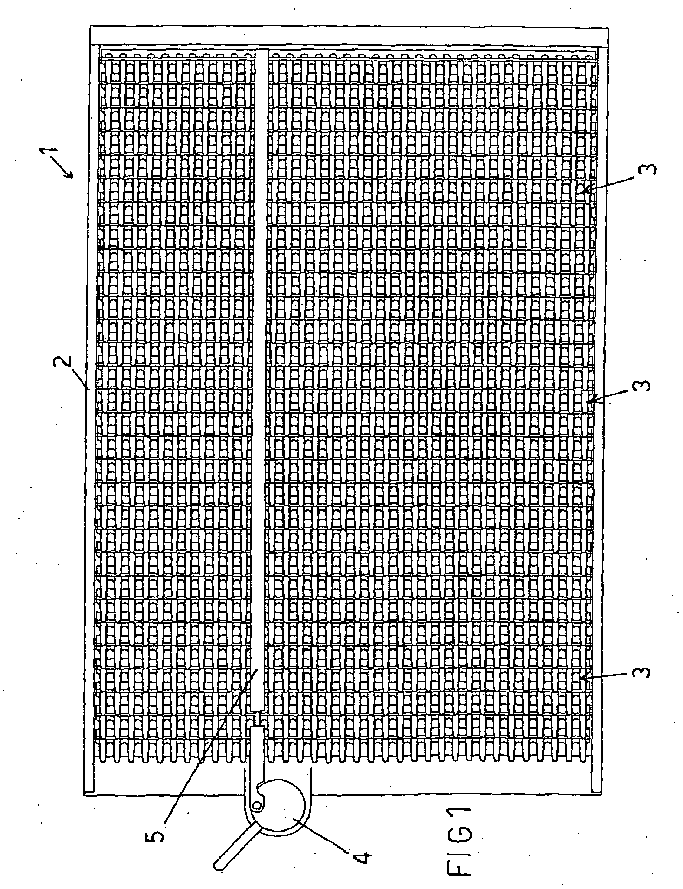

Figure 1 is a schematic top plan view of a sieve according to the invention;

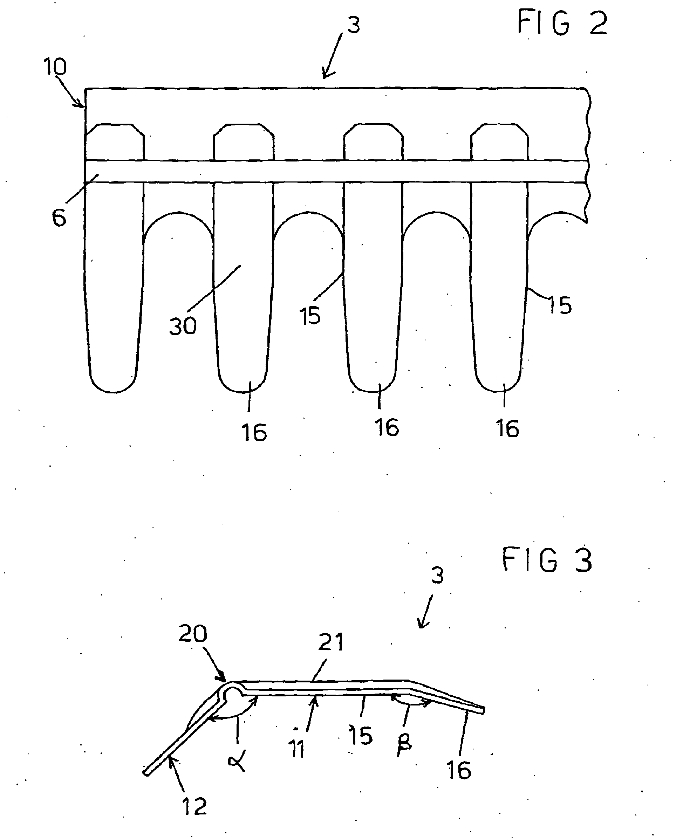

Figure 2 illustrates a further top plan view, on an enlarged scale, of a blade detail;
Figure 3 is a side elevation view illustrating, from an end, the configuration of a blade element;

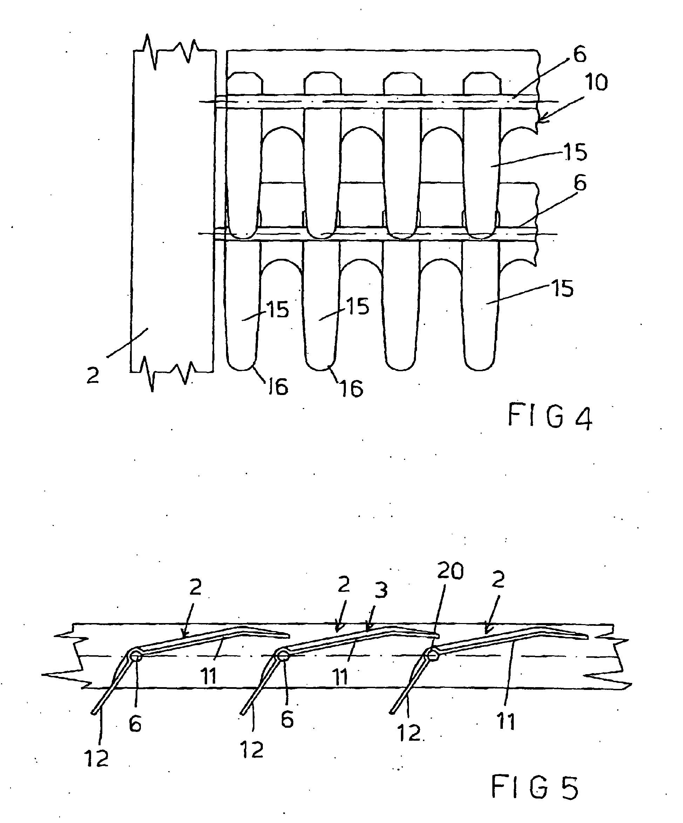

Figure 4 is a schematic top plan view illustrating a portion of the sieve according to the invention; and
Figure 5 is a cross-sectional view of the inventive sieve substantially taken along the section line V-V of figure 4.

### DESCRIPTION OF THE PREFERRED EMBODIMENTS

With reference to the number references of the above mentioned figures, the sieve, specifically designed for combine harvesters for harvesting cereals in general, according to the present invention, which has been generally indicated by the reference number 1, comprises a supporting frame 2, supporting a plurality of sieving blade elements, generally indicated by the reference number 3, which, in particular, are supported by longitudinally extending pins 6, which are so designed as to provide blade elements either of fixed position or blade elements 3 of variable position, through a handle 4, affecting an adjusting rod 5, which in turn transversely affects all the blade elements.

A feature of the invention is that each blade element 3 comprises a plate-like body 10, defining two wings and, more specifically, a first wing 11 and a second wing 12, which are mutually slanted with an angle α, formed therebetween, which is preferably of 145°.

The wing 12, in particular, operates as a deflector element for conveying a fan supplied air.

Thus, the gap air, passing through the suitably adjusted blade elements, will provide an air cushion for causing straw material to fly away thereby improving the cereal falling.

The wing 11 comprises a plurality of tooth elements, indicated by the reference number 15, ending with a folded free end portion 16.

Said folded free end portion 16 defines, in particular, on the bottom side an angle β which preferably corresponds to 165°.

A further feature of the invention is that between said wings 11 and 12 a fitting portion 20 is provided, said fitting portion providing a curved part which practically forms a longitudinally extending central rib at said rib being arranged said supporting pins 6.

Each tooth element 15 comprises, in a cross-section thereof, a curved shape with an upward directed convexity, thereby providing a plurality of cross ribs 30 which are extended, for a portion, also on the second wing.

The end portion 16 of each tooth element, in addition to prosecute with a zeroing of the rib height, which has been generally indicated by the reference number 21, converges to a tapering portion formed at the free end portion of each tooth element 15.

Thus, while using a plate-like element, it is possible to provide a comparatively high mechanical stiffness, allowing to optimize the support functions.

In particular, the tooth elements 15 have a mutual inter-axis, which is substantially equal to at least 2/3 of the length, and between two tooth elements there is a spacing corresponding to at least 1/3 of the length, thereby the effective width of each tooth element will substantially corresponds to 1/3 of the length.

From practical tests, it has been found that the tooth elements 15 have preferably a length of 38 mm with an inter-axis of 26 mm and a spacing from one tooth element to the other of about 13 mm.

The thickness of the plate-like element preferably varies form 0.8 to 1 mm, whereas the width of the first wing is preferably of 44 mm and the width of the second wing is of substantially 20 mm.

From the above disclosure it should be apparent that the invention fully achieves the intended aim and objects.

In particular, the fact is to be pointed out that the curved cross-section configuration of the tooth elements and of the longitudinal cross-section of the blade elements provide a mechanical stiffening function which optimize all the solutions.

Moreover, the specifically designed geometry of the slanted wings allows to increase the harvesting speed, together with a full cleaning preventing any material stagnations.

In practicing the invention, the used materials, provided that they are compatible to the intended use, as well as the contingent size and shapes, can be any, depending on requirements.

## Claims

1. A sieve (1) for combine harvesters for harvesting cereals in general, comprising a supporting frame (2) for supporting a plurality of sieving blade elements (3), said blade elements (3) comprising a plate body (10) having two mutually first and second slanted wings (11, 12), joined by a joining portion (20) providing a longitudinally extending rib and a connection region for supporting pins (6) supported by said frames (2), from said first (11) of said wings (11, 12) extending a plurality of tooth elements (15) which, through their longitudinal extension, comprise a curved crosssection, having an upward directed convexity, thereby defining cross ribs (30) which are extended also on said second wing (12), **characterized in that** said tooth elements (15) have an end portion (16) thereof which is slanted with respect to a body of the tooth elements (15).

2. A sieve, according to the preceding claim, **characterized in that** said first wing (11) is slanted with respect to said second wing (12) by an angle (α) of substantially 145°.

3. A sieve, according to claim 1, **characterized in that** said end portion (16) forms, with said tooth element body, and angle (β) of 165°.

4. A sieve, according to claim 1, **characterized in that** said tooth elements (15) have an inter-axis corresponding substantially to 2/3 of their length and a spacing between the tooth element flanks of substantially 1/3 of their length.

5. A sieve, according to claim 1, **characterized in that** said end portions (16) are tapering and grounded.

6. A sieve, according to claim 1, **characterized in that** said cross ribs (30) are zeroed at the ends of said end portions (16).

## Patentansprüche

1. Sieb (1) für Mähdrescher zum Ernten von Getreide im Allgemeinen, umfassend einen Tragrahmen (2) zum Tragen mehrerer Sieblamellenelemente (3), wobei die Lamellenelemente (3) einen Plattenkörper (10) mit zwei beiderseitigen abgeschrägten Flügeln, einem ersten und einem zweiten (11, 12), umfassen, die durch einen Verbindungsabschnitt (20) verbunden sind, der eine sich in Längsrichtung erstreckende Rippe und einen Verbindungsbereich zum Tragen von Zapfen (6), die durch die Rahmen (2) getragen werden, vorsieht, wobei sich von dem ersten (11) der Flügel (11, 12) mehrere Zahnelemente (15) weg erstrecken, die über ihre Längserstreckung einen gekrümmten Querschnitt umfassen, mit einer nach oben gerichteten Konvexität, und **dadurch** Querrippen (30) definieren, die sich auch auf dem zweiten Flügel (12) erstrecken, **dadurch gekennzeichnet, dass** die Zahnelemente (15) einen Endabschnitt (16) aufweisen, der in Bezug auf einen Körper der Zahnelemente (15) abgeschrägt ist.

2. Sieb nach dem vorhergehenden Anspruch, **dadurch gekennzeichnet, dass** der erste Flügel (11) in einem Winkel (α) von im Wesentlichen 145° in Bezug auf den zweiten Flügel (12) abgeschrägt ist.

3. Sieb nach Anspruch 1, **dadurch gekennzeichnet, dass** der Endabschnitt (16) mit dem Zahnelementkörper einen Winkel (β) von 165° bildet.

4. Sieb nach Anspruch 1, **dadurch gekennzeichnet, dass** die Zahnelemente (15) einen Achsabstand, der im Wesentlichen 2/3 ihrer Länge entspricht, und einen Abstand zwischen den Zahnelementflanken von im Wesentlichen 1/3 ihrer Länge aufweisen.

5. Sieb nach Anspruch 1, **dadurch gekennzeichnet, dass** die Endabschnitte (16) schräg zulaufen und abgerundet sind.

6. Sieb nach Anspruch 1, **dadurch gekennzeichnet, dass** die Querrippen (30) an den Enden der Endabschnitte (16) ausgenullt sind.

## Revendications

1. Tamis (1) pour moissonneuses-batteuses permettant de récolter des céréales, d'une manière générale, comprenant un bâti de support (2) destiné à supporter une pluralité d'éléments de lamelles de tamisage (3), lesdits éléments de lamelles (3) comprenant un corps de plaque (10) ayant deux première et seconde ailettes inclinées l'une par rapport à l'autre (11, 12), réunies par une partie de raccordement (20) fournissant une nervure s'étendant longitudinalement et une région de connexion destinée à supporter des goujons (6) supportés par lesdits bâtis (2), à partir de ladite première (11) desdites ailettes (11, 12) s'étendant une pluralité d'éléments de dent (15) comprenant, sur l'ensemble de leur extension longitudinale, une section transversale incurvée, ayant une convexité dirigée vers le haut, en définissant ainsi des nervures croisées (30) qui s'étendent également sur ladite seconde ailette (12), **caractérisé en ce que** lesdits éléments de dent (15) présentent une partie d'extrémité (16) qui est inclinée par rapport à un corps des éléments de dent (15) .

2. Tamis selon la revendication précédente, **caractérisé en ce que** ladite première ailette (11) est inclinée par rapport à ladite seconde ailette (12) suivant un angle (α) de sensiblement 145°.

3. Tamis selon la revendication 1, **caractérisé en ce que** ladite partie d'extrémité (16) forme, avec ledit corps d'élément de dent, un angle (β) de 165°.

4. Tamis, selon la revendication 1, **caractérisé en ce que** lesdits éléments de dent (15) présentent un entre-axe correspondant sensiblement à 2/3 de leur longueur et un espacement entre les flancs d'élément de dent de sensiblement 1/3 de leur longueur.

5. Tamis selon la revendication 1, **caractérisé en ce que** lesdites parties d'extrémité (16) sont coniques et arrondies.

6. Tamis selon la revendication 1, **caractérisé en ce que** lesdites nervures croisées (30) sont remises en position initiale aux extrémités desdites parties d'extrémité (16).
